(19) Europäisches Patentamt / European Patent Office / Office européen des brevets

(11) **EP 3 807 594 B1**

(12) **FASCICULE DE BREVET EUROPEEN**


(45) Date de publication et mention de la délivrance du brevet:
**08.06.2022 Bulletin 2022/23**

(21) Numéro de dépôt: **19745679.1**

(22) Date de dépôt: **12.06.2019**

(51) Classification Internationale des Brevets (IPC):
***G01C 25/00*** ^(2006.01)^ ***G01C 17/38*** ^(2006.01)^
***G01C 21/16*** ^(2006.01)^

(52) Classification Coopérative des Brevets (CPC):
**G01C 17/38; G01C 21/165; G01C 25/00**

(86) Numéro de dépôt international:
**PCT/FR2019/051414**

(87) Numéro de publication internationale:
**WO 2019/239062 (19.12.2019 Gazette 2019/51)**


(54) **PROCÉDÉ DE CALIBRATION DE MAGNÉTOMÈTRES ÉQUIPANT UN OBJET**

VERFAHREN ZUM KALIBRIEREN VON IN EINEM OBJEKT MONTIERTEN MAGNETOMETERN

METHOD FOR CALIBRATING MAGNETOMETERS FITTED IN AN OBJECT


(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2018 FR 1855160**

(43) Date de publication de la demande:
**21.04.2021 Bulletin 2021/16**



(73) Titulaire: **SYSNAV**
**27200 Vernon (FR)**

(72) Inventeurs:
- **VISSIERE, David**
**75009 Paris (FR)**
- **HILLION, Mathieu**
**27200 Vernon (FR)**
- **MEIER, Hendrik**
**27200 Vernon (FR)**

(74) Mandataire: **Regimbeau**
**20, rue de Chazelles**
**75847 Paris Cedex 17 (FR)**



(56) Documents cités:
**US-A1- 2002 100 178** **US-A1- 2011 178 707**
**US-A1- 2012 203 486**



Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).


EP 3 807 594 B1

**Description**

DOMAINE TECHNIQUE GENERAL

La présente invention concerne le domaine de la navigation sans GNSS.

Plus précisément, elle concerne un procédé de calibration de magnétomètres solidaires d'un gyromètre.

ETAT DE L'ART

Il est aujourd'hui commun de suivre la position d'un véhicule par GNSS (Global Navigation Satellite System, par exemple le GPS) ou en utilisant un réseau de communication (triangulation à l'aide de bornes émettrices, réseau wifi ou autres).

Ces méthodes s'avèrent très limitées car elles ne permettent pas d'assurer disponibilité et précision de l'information, l'une et l'autre étant affectées par d'éventuels masquages entre les sources et le récepteur. Elles s'avèrent également dépendantes de technologies extérieures comme les satellites pour le GNSS qui peuvent être indisponibles voire volontairement brouillées.

Alternativement, on connait aussi des méthodes « autonomes » pour suivre dans n'importe quel environnement le déplacement relatif d'un véhicule grâce à une centrale inertielle ou magnéto-inertielle. Par déplacement relatif, on entend la trajectoire du véhicule dans l'espace par rapport à un point et à un repère donnés à l'initialisation. En plus de la trajectoire, ces méthodes permettent également d'obtenir l'orientation du véhicule par rapport au même repère initial.

Une centrale inertielle de classe navigation est constituée au minimum de trois accéléromètres et de trois gyromètres disposés en triaxe. Typiquement, les gyromètres « maintiennent » un repère, dans lequel une double intégration temporelle des mesures des accéléromètres permet d'estimer le mouvement.

Il est notablement connu que pour pouvoir utiliser les méthodes de navigation inertielle classique, telles que mises en œuvre dans les applications lourdes comme la navigation des avions de chasse ou de ligne, des sous-marins, des navires, etc., il est nécessaire d'utiliser des capteurs de très haute précision.

Or, de tels capteurs très haute précision sont onéreux, lourds et encombrants, et donc inadaptés à des applications grand public.

On utilise ainsi en conséquence des capteurs bas-couts, présentant des risques d'erreur importants, pour lesquels la calibration (processus qui permet d'identifier puis d'enlever des défauts de la mesure des capteurs) est donc un processus critique.

On connait des méthodes de calibration de magnétomètres à partir d'un gyromètre.

La demande US2012/0116716 propose de regarder si l'évolution d'un champ magnétique entre deux points de mesure correspond au changement de l'attitude prédite par l'intégration des gyromètres. Elle fait cependant l'hypothèse que les mesures magnétométriques/accélérométriques sont fiables, ce qui est délicat lorsque le système est embarqué dans un véhicule. En effet, on constate en pratique que :

- le champ magnétique ambiant n'est pas toujours homogène et stationnaire ;
- les éléments métalliques (par exemple une carrosserie) ou aimants à proximité ont un impact sur la mesure magnétique (effets fer doux et fer dur), voir également la demande US2004/0123474.
- Pour calibrer correctement un magnétomètre, il est nécessaire de le mettre dans un maximum d'orientation spatiale de manière à "exciter le modèle d'erreur" pour avoir de l'observabilité. Ce problème est facilement soluble pour un équipement qu'on peut porter à la main dans le cas où on fait une calibration avant de s'en servir (on le tourne dans tous les sens, voir par exemple la demande FR1757082). Si le magnétomètre équipe un véhicule, on est contraint :

  o par le fait que lors d'un trajet typique d'un véhicule, roulis et tangage ne dévient de zéro que faiblement.
  o par le fait que la caisse s'aimante, ou le fait qu'on a chargé le véhicule, ce qui fait que la calibration peut n'être plus pertinente; ce qui va nécessiter des recalibrations régulières.

La demande US2011/0178707 concerne plus précisément les dispositifs de type smartphone comprenant une boussole magnétique et un gyromètre, et évoque le problème des perturbations magnétiques. Cette demande vise plutôt la calibration de la boussole magnétique à partir des données gyrométriques, mais propose également l'inverse, en prenant quant à elle comme point de départ un quaternion q magnéto-accélérométrique et en obtenant la vitesse angulaire de recalage à partir de ce quaternion $\omega=2q^{-1}\dot{q}$. Cependant, il est toujours fait l'hypothèse que les mesures magnétométriques/accélérométriques sont fiables, et dans le cas contraire il est juste proposé soit de ne pas mettre à jour le biais du gyromètre tant que cette situation dure, soit d'utiliser un quaternion par défaut stocké dans une mémoire.

La demande US2002/0100178 concerne un modèle algébrique à trois axes, utilisé pour corriger numériquement des erreurs magnétiques dans des valeurs mesurées de champs magnétiques. Au cours d'un procédé de calibration, les champs magnétiques et gravitationnels sont mesurés et cet ensemble de champs magnétiques et gravitationnels mesurés est utilisé pour calculer un coefficient de correction de matrice et un coefficient de correction de vecteur au moyen d'un système d'équations.

Il serait souhaitable de disposer d'une nouvelle méthode de calibration de magnétomètres d'un objet en vue de l'estimation du mouvement de cet objet qui permette une excellente qualité de résultat et ne soit pas contraignante.

PRESENTATION DE L'INVENTION

La présente invention se rapporte ainsi selon un premier aspect à un procédé de calibration de magnétomètres équipant un objet évoluant dans un champ magnétique ambiant, le procédé étant caractérisé en ce qu'il comprend des étapes de :

(a) Acquisition

- par les magnétomètres, d'au moins trois composantes mesurées du champ magnétique au niveau des magnétomètres, et
- par des moyens de mesure inertielle solidaires dudit objet, d'une vitesse angulaire de l'objet ;

(c) Détermination par des moyens de traitement de données de valeurs d'au moins un paramètre de calibration des magnétomètres minimisant une expression définie par des composantes estimées du champ magnétique et au moins une équation magnétique sur la vitesse angulaire de l'objet,

- les composantes estimées du champ magnétique étant fonction des composante mesurées du champ magnétique et de paramètres de calibration des magnétomètres, et
- l'au moins une équation magnétique supposant un caractère uniforme et stationnaire du champ magnétique au niveau des moyens de mesure magnétique.

Selon d'autres caractéristiques avantageuses et non limitatives :

- les composante estimées $M^{(estimation)}$ du champ magnétique sont liées aux composantes mesurées $M^{(mesure)}$ par un modèle $M^{(mesure)} = A \cdot M^{(estimation)} + b_{magneto}$, où $A$ et $b_{magneto}$ sont les paramètres de calibration des magnétomètres ;
- le procédé en outre une étape (b) d'estimation d'un paramètre représentatif d'une erreur sur les paramètres de calibration, l'étape (c) étant mise en œuvre si ledit paramètre représentatif d'une erreur est supérieur à un seuil prédéterminé ;
- Le procédé comprend en outre une étape (d) de nouvelle estimation dudit paramètre représentatif d'une erreur sur les paramètres de calibration de sorte à distinguer une perturbation magnétique externe d'un changement de propriétés magnétiques de l'objet ;
- Le procédé comprend en outre, si à l'issue de l'étape (d) ledit paramètre représentatif d'une erreur est inférieur à un seuil prédéterminé, une étape (e) de détermination d'un sous-ensemble des attitudes de l'objet pour lequel la calibration est pertinente ;
- l'étape (c) comprend la mise en œuvre d'un filtre récursif ou d'une optimisation ;
- les moyens de mesure inertielle sont un gyromètre, la vitesse angulaire de l'objet acquise à l'étape (a) étant une vitesse angulaire mesurée, et celle utilisée par la ou les équations magnétiques est une vitesse angulaire estimée en fonction de la vitesse angulaire mesurée et de paramètres de calibration du gyromètre, l'étape (c) comprenant également la détermination de valeurs d'au moins un paramètre de calibration du gyromètre ;
- la vitesse angulaire estimée $\omega_{gyro}^{(estimation)}$ de l'objet est liée à la vitesse angulaire mesurée $\omega_{gyro}^{(mesure)}$ par un modèle $\omega_{gyro}^{(estimation)} = D \cdot (\omega_{gyro}^{(mesure)} + b_{gyro})$ ; où $D$ et $b_{gyro}$ sont les paramètres de calibration du gyromètre ;
- l'équation magnétique est de la forme $\dot{M} = -\omega \times M$, où M est le vecteur des composantes du champ magnétique, et $\omega$ la vitesse angulaire ;
- ladite expression est fonction de $\left|\dot{M}^{(estimation)} + \omega_{gyro}^{(estimation)} \times M^{(estimation)}\right|$

- ledit paramètre représentatif d'une erreur sur les paramètres de calibration est soit la moyenne de $\left|\dot{M}^{(estimation)} + \omega_{gyro}^{(estimation)} \times M^{(estimation)}\right|^2$ sur un intervalle de temps donné, soit un gradient spatial desdites composantes du champ magnétique ;
- le procédé comprend une étape (f) d'estimation par les moyens de traitement de données du mouvement dudit objet en fonction de la vitesse angulaire de l'objet, des composantes mesurées du champ magnétique, et des valeurs des paramètres de calibration.

Selon un deuxième aspect, est proposé un objet évoluant dans un champ magnétique ambiant, comprenant des moyens de mesure inertielle configurés pour acquérir une vitesse angulaire de l'objet, des magnétomètres configurés pour acquérir au moins trois composantes du champ magnétique, l'objet étant caractérisé en ce qu'il comprend en outre des moyens de traitement de données configurés pour :

- déterminer des valeurs d'au moins un paramètre de calibration des magnétomètres minimisant une expression définie par des composantes estimées du champ magnétique et au moins une équation magnétique sur la vitesse angulaire de l'objet,
    - les composantes estimées du champ magnétique étant fonction des composante mesurées du champ magnétique et de paramètres de calibration des magnétomètres, et
    - l'au moins une équation magnétique supposant un caractère uniforme et stationnaire du champ magnétique au niveau des moyens de mesure magnétique.

Selon un troisième et un quatrième aspect, sont proposés un produit programme d'ordinateur comprenant des instructions de code pour l'exécution d'un procédé selon le premier aspect de calibration de magnétomètres ; et un moyen de stockage lisible par un équipement informatique sur lequel un produit programme d'ordinateur comprend des instructions de code pour l'exécution d'un procédé selon le premier aspect de calibration de magnétomètres.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 représente un exemple d'architecture de véhicule pour la mise en œuvre du procédé selon l'invention ;
- la figure 2 est un diagramme représentant les étapes d'un mode de réalisation préféré du procédé selon l'invention.

DESCRIPTION DETAILLEE

*Architecture*

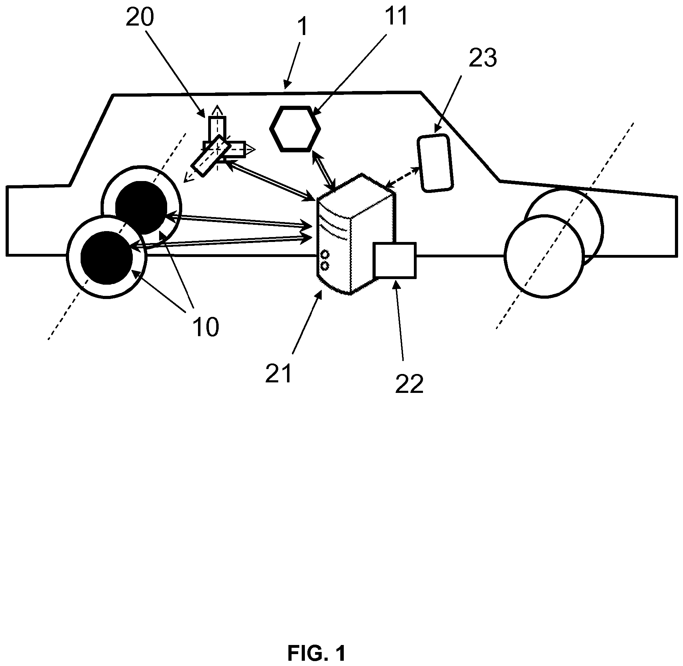

En référence à la **figure 1,** le présent procédé permet la calibration de magnétomètres 20 d'un objet 1 évoluant dans un champ magnétique ambiant (typiquement le champ magnétique terrestre, le cas échéant altéré par les objets métalliques à proximité), noté M. Comme déjà expliqué, le champ magnétique est un champ vectoriel en l'espèce tridimensionnel, c'est-à-dire associant un vecteur de dimension trois à chaque point de tridimensionnel dans lequel l'objet 1 est mobile.

Cet objet 1 peut être n'importe quel objet mobile dont la connaissance de la position est souhaitée, par exemple un véhicule, en particulier un véhicule à roues, un drone, etc., mais également une personne ou une partie du corps de cette personne (ses mains, sa tête, etc.).

Le ou les magnétomètres 20 sont solidaires de l'objet 1, et sont « axiaux », c'est à dire capables de mesurer une composante dudit champ magnétique, i.e. la projection dudit vecteur champ magnétique M selon leur axe.

Les magnétomètres 20 sont au moins au nombre de trois de sorte à pouvoir acquérir 3 composantes du champ magnétique. Avantageusement les magnétomètres 20 sont même au moins au nombre de 8 voire 9, avantageusement organisés par groupes de trois en « triaxes », i.e. un triplet de magnétomètres 20 deux à deux orthogonaux associés à la même position spatiale et mesurant le champ magnétique selon les trois axes.

De façon préférée, le repère orthonormé associé à l'objet est choisi par convention (et par facilité pour la suite de la présente description) tel que les triaxes sont avantageusement orientés conformément audit repère orthonormé, de sorte à faciliter encore les calculs.

Mais l'homme du métier saura dans tous les cas transposer à n'importe quelle disposition spatiale de magnétomètres.

L'objet 1 est en outre équipé de moyens de mesure inertielle 11 capables de mesurer la vitesse angulaire de l'objet (par exemple solidaire de la carrosserie dans le cas d'un véhicule, et de façon générale fixe dans le référentiel de l'objet 1) selon un système de trois axes orthogonaux, qui définissent le repère objet. Les moyens 11 consistent préférentiellement en un ou plusieurs gyromètres, mais peuvent également constituer en un ou plusieurs gyroscopes ou toute autre source d'attitude ou de vitesse angulaire (3D).

Dans le mode de réalisation préféré où l'objet 1 est un véhicule, la rotation autour de l'axe vertical du véhicule est décrite par l'angle sur lequel le conducteur agit en tournant le volant. Sur un sol généralement plat, les changements de direction du véhicule sont dans le plan horizontal, i.e. également selon ledit axe vertical. En réalité, des valeurs non-nulles pour le roulis (rotation selon l'axe longitudinal du véhicule) et le tangage (rotation selon l'axe transversal du véhicule) peuvent être le résultat par exemple d'une route en pente mais sont typiquement faibles.

L'objet 1 peut en outre être avantageusement équipé de moyens d'acquisition « supplémentaires » 10 d'une vitesse linéaire mesurée de l'objet 1 (notée V), c'est-à-dire du déplacement. Ces moyens 10 peuvent directement ou indirectement permettre d'obtenir la vitesse linéaire, et ainsi être de nombreux types, par exemple des moyens de mesure inertielle. Ainsi le ou les gyromètres 11 peuvent être complétés par un ou plusieurs accéléromètres, voire l'objet 1 peut comprendre une centrale à inertie à au moins trois accéléromètres et trois gyromètres disposés en triaxe.

Alternativement, les moyens 10 peuvent consister, si l'objet 1 est un véhicule à roues, en au moins deux odomètres chacun pour une roue du véhicule, par exemple les deux roues arrière, comme cela est représenté dans l'exemple de la **figure 1.** On note qu'un ensemble d'odomètres est un moyen simple et fiable d'obtenir une simple vitesse linéaire.

L'objet 1 comprend en outre comme expliqué des moyens de traitement 21 (typiquement un processeur) pour la mise en œuvre directement en temps réel des traitements du présent procédé, par exemple un ordinateur de bord d'un véhicule, et éventuellement une mémoire 22, et une interface 23 pour restituer des informations du mouvement de l'objet 1 (une valeur de vitesse instantanée, un cap, une position sur une carte, etc.), et/ou envoyer des commandes à l'objet 1. L'objet 1 peut à ce titre être notamment un véhicule autonome, et les moyens de traitement 21 configurés pour mettre en œuvre la navigation autonome du véhicule. Ainsi, lesdites commandes sont envoyées aux organes de contrôle du véhicule (moteur, actionneurs du volant, etc.) de sorte à simuler la conduite par le conducteur.

A noter que les moyens de traitement 21 peuvent être externe à l'objet 1, et par exemple connecté à ces derniers par un réseau sans fil. Alternativement, les moyens de mesure inertielle 11 et les magnétomètres 20 peuvent être connectés aux moyens de traitement de données 21 en particulier de manière filaire, par exemple via Ethernet.

*Procédé*

Le présent procédé est un procédé de calibration d'au moins les magnétomètres 20. Par calibration, on entend la détermination d'un ou plusieurs paramètres de calibration, dont on verra une liste plus loin. En particulier, certains paramètres de calibration peuvent être considérés fiables et prédéterminés, et d'autres à déterminer. En ce qui concerne ceux à déterminer, on peut prévoir qu'ils présentent des valeurs « actuelles » (en d'autres termes qu'une calibration a déjà eu lieu), et que ces valeurs vont le cas échéant être modifiées (en cas de nouvelle calibration).

On suppose que les magnétomètres 20 en eux-mêmes sont a *priori* parfaitement calibrés (ce qui veut dire que toutes les perturbations magnétiques liées aux magnétomètres en eux-mêmes sont identifiées et corrigées), ce n'est que leur environnement direct (carrosserie, etc.) qui doit être corrigé en calibration afin de pouvoir estimer le champ magnétique terrestre que l'on mesurerait en absence de l'objet 1.

Dans un mode de réalisation particulièrement préféré, le procédé peut en outre être un procédé de calibration des moyens de mesure inertielle 11, i.e. le ou les gyromètres 11 et les magnétomètres 20 peuvent être calibrés simultanément. Il s'agit d'un mode extrêmement avantageux, puisque comme l'on verra il n'y a même plus besoin de supposer que l'un du gyromètre ou du magnétomètre est fiable pour l'utiliser comme référence pour calibrer l'autre : les deux se calibrent automatiquement l'une l'autre. Alternativement, il sera bien entendu possible de considérer le gyromètre 11 comme bien calibré et de calibrer les magnétomètres 20 en conséquence, ce qui permet par exemple de calibrer plus de paramètres des magnétomètres 20.

Comme l'on verra, dans un mode de réalisation avantageux le présent procédé est même un procédé d'estimation du mouvement de l'objet 1, i.e. il comprend suite à la calibration, l'utilisation des mesures calibrées pour en déduire de façon fiable une ou plusieurs composantes du mouvement.

Dans une première étape (a), le procédé comprend l'acquisition par les moyens de mesure inertielle 11 d'une vitesse angulaire de l'objet 1, notée $\omega_{gyro}^{(mesure)}$, et par les magnétomètres 20, d'au moins trois composantes du champ magnétique. Ces composantes sont plus précisément des composantes dites mesurées, formant un vecteur noté

$M^{(mesure)}$. De façon préférée, on acquiert trois composantes de la vitesse angulaire et au moins huit composantes magnétiques (avantageusement trois triaxes magnétométriques positionnés aux coins d'un triangle rectangulaire isocèle), de sorte à pouvoir en déduire le champ et son gradient (i.e. les dérivées à l'ordre suivant selon les trois axes).

Ces grandeurs sont avantageusement mesurées avec un échantillonnage dt (i.e. toutes les « dt » secondes) avec dt très petit devant le temps caractéristique des mouvements de l'objet 1, typiquement 40 ms.

Dans une étape (c) (comme l'on verra plus loin le procédé comprend avantageusement une étape (b) intermédiaire, mais cette dernière reste optionnelle), les moyens de traitement de données 21 déterminent les valeurs d'au moins un paramètre de calibration des magnétomètres 20 minimisant une expression définie par des composantes estimées du champ magnétique et au moins une équation magnétique sur la vitesse angulaire de l'objet 1.

L'idée est d'estimer séparément des données gyrométriques et des données magnétiques qui sont théoriquement liées par une équation magnétique. Ainsi grâce à l'équation on peut exprimer une quantité qui idéalement devrait être nulle (i.e. les données gyrométriques et magnétiques vérifient exactement l'équation magnétique), sinon c'est que la calibration est à parfaire.

Les composantes estimées du champ magnétique, notées $M^{(estimation)}$, sont fonction des composantes mesurées du champ magnétique $M^{(mesure)}$ et de paramètres de calibration des magnétomètres 20.

De façon préférée, elles sont liées aux composantes mesurées $M^{(mesure)}$ par un modèle $M^{(mesure)} = A \cdot M^{(estimation)} + b_{magneto}$, où la matrice 3x3 $A$ et le vecteur $b_{magneto}$ sont les paramètres de calibration des magnétomètres 20. Dans la mesure où c'est plutôt la composante estimée qu'on souhaite exprimée en fonction de la composante mesurée, on peut écrire $M^{(estimation)} = A^{-1} \cdot (M^{(mesure)} - b_{magneto})$.

$b_{magneto}$ est généralement représentatif des effets « type fer dur », et la matrice $A$ représentative des effets «type fer doux». Ces effets correspondent aux effets fer dur/doux à proprement parler et peuvent aussi inclure des phénomènes avec le même impact mais une cause différente (p.ex. des effets dus à l'électronique/la physique du magnétomètre).

A noter que plus généralement, on peut regarder un modèle d'erreur général : $M^{(estimation)} = h(M^{(mesure)})$ avec h une fonction (application) qui n'est pas nécessairement affine.

Dans le cas linéaire ($M^{(mesure)} = A \cdot M^{(estimation)} + b_{magneto}$), $A$ est une matrice 3x3, que l'on peut écrire comme $A=R\cdot\tilde{A}$ avec R orthogonale et $\tilde{A}$ triangulaire supérieure.

On rappelle qu'on suppose que les magnétomètres 20 en eux-mêmes sont *a priori* parfaitement calibrés, ce n'est que leur environnement direct (carrosserie, etc.) qui doit être corrigé en calibration afin de pouvoir estimer le champ magnétique terrestre que l'on mesurerait en absence de l'objet 1. La matrice R est ainsi importante et à déterminer en sorte que le repère magnétique objet reste stable.

Les méthodes classiques de calibration par rapport à des sphères ne déterminent R qu'à une rotation autour d'un axe près (voir le document E.

*Dorveaux, D. Vissière, A. P. Martin, N. Petit,* "Iterative calibration method for inertial and magnetic sensors", in Proc. of the 48th IEEE Conf. on Decision and Control 2009*).* Les axes capteurs ne restent pas fixes après l'application de ces méthodes.

On peut en pratique déterminer 8 coefficients de $A$ en calibration (un coefficient, le facteur d'échelle global qui relie la mesure à l'unité physique en Tesla (ou Gauss), ne peut pas être déterminé, mais, en même temps, il n'est pas nécessaire de le connaître pour un certain nombre d'applications (ex: utilisation des magnétomètres pour déterminer le cap d'un objet). A noter qu'il reste avantageusement souhaitable de stocker la valeur (moyenne) de la norme du champ durant la calibration (par rapport au facteur d'échelle choisi), voir plus loin.

Comme expliqué, la vitesse angulaire acquise à l'étape (a) est préférentiellement une vitesse mesurée (i.e. potentiellement entachée d'erreurs), et celle utilisée par ladite équation magnétique est une vitesse estimée, notée $\omega_{gyro}^{(estimation)}$, en fonction de la vitesse mesurée et de paramètres de calibration des moyens de mesure inertielle 11.

De façon préférée, en particulier dans le cas où les moyens 11 sont un gyromètre, en général $\omega_{gyro}^{(estimation)} = g(\omega_{gyro}^{(mesure)})$ avec $g$ une fonction (application) qui est déterminée par les paramètres de calibration. Au cas le plus simple, $g$ est affine et la vitesse angulaire estimée $\omega_{gyro}^{(estimation)}$ est liée à la vitesse angulaire mesurée $\omega_{gyro}^{(mesure)}$ par la formule $\omega_{gyro}^{(estimation)} = D \cdot (\omega_{gyro}^{(mesure)} + b_{gyro})$, où $D$ et $b_{gyro}$ sont les paramètres de calibration du gyromètre 11.

Dans le cas d'une attitude tridimensionnelle, $b_{gyro}$ est un vecteur de biais et $D$ est une matrice 3x3 (matrice orthogonale de passage au bon repère) $\times$ (matrice triangulaire supérieure contenant les facteurs d'échelle et les calages). De façon simplifiée, on peut par exemple considérer que $D$ est prédéterminée (elle varie en pratique très lentement) et que le seul paramètre de calibration à déterminer pour le gyromètre 11 est $b_{gyro}$, qui a effectivement tendance à varier dans le temps (on parle de dérive du gyromètre 11).

Dans un mode de réalisation particulièrement préféré de double calibration simultanée, il n'y a que trois paramètres de calibration à déterminer : $b_{gyro}$, $A$ et $b_{magnéto}$ . Ce nombre restreint de paramètres rend possible une telle double calibration dès lors que l'objet 1 présente une trajectoire « variée » (directions / vitesses qui varient en fonction du temps).

*Equation magnétique*

L'évolution du champ magnétique dans le repère *body* (i.e. le repère de l'objet 1) au cours du temps est décrite par l'équation $\dot{M} = -\omega \times M + \nabla M \cdot V + \frac{\partial M}{\partial t}$.

Le premier terme $-\omega \times M$ décrit le changement du champ dans le repère *body* qui est dû à la rotation de ce repère par rapport au repère fixe. Le deuxième terme $\nabla M \cdot V$ décrit le changement du champ mesuré issu de la translation dans une région avec un champ inhomogène. Finalement, le troisième terme $\frac{\partial M}{\partial t}$ prend en compte les instationnarités du champ magnétique (par exemple les courants périodiques tels que le 50 Hz en Europe ou des mouvements d'un aimant/un objet en acier à proximité dudit objet, etc.).

S'il n'y a pas de perturbation magnétique « mobile », i.e. le champ magnétique présente un caractère stationnaire, $\frac{\partial M}{\partial t} \approx 0$ , et on peut réduire l'équation à $\dot{M} = -\omega \times M + \nabla M \cdot V$.

S'il n'y a pas de perturbation magnétique du tout, i.e. le champ magnétique présente un caractère uniforme en plus de stationnaire, VM ≈ 0 et on peur même réduire l'équation à $M = -\omega \times M$.

Cette double hypothèse d'uniformité et stationnarité est normalement le plus souvent vérifiée. En effet, pour le champ magnétique terrestre, l'uniformité est localement constatée en très bonne approximation dans nos latitudes, hors les cas de présence par exemple d'une structure métallique ou en béton armé (typiquement un pont) dans les alentours. Les instationnarités dues à des déplacements d'objets à proximité sont encore plus rares car il faudrait que les sources de perturbations se déplacent, et les éventuelles instationnarités dues à des courants périodiques sont en moyenne nulle peuvent aussi la traiter avec des techniques d'estimation, voir par exemple document C.-I. Chesneau, M. Hillion, and C. Prieur, Motion estimation of a Rigid Body with an EKF using Magneto-Inertial Measurements, 7th Conf. on Indoor Positioning and Indoor Navigation (IPIN'16), Madrid, Spain, 2016.

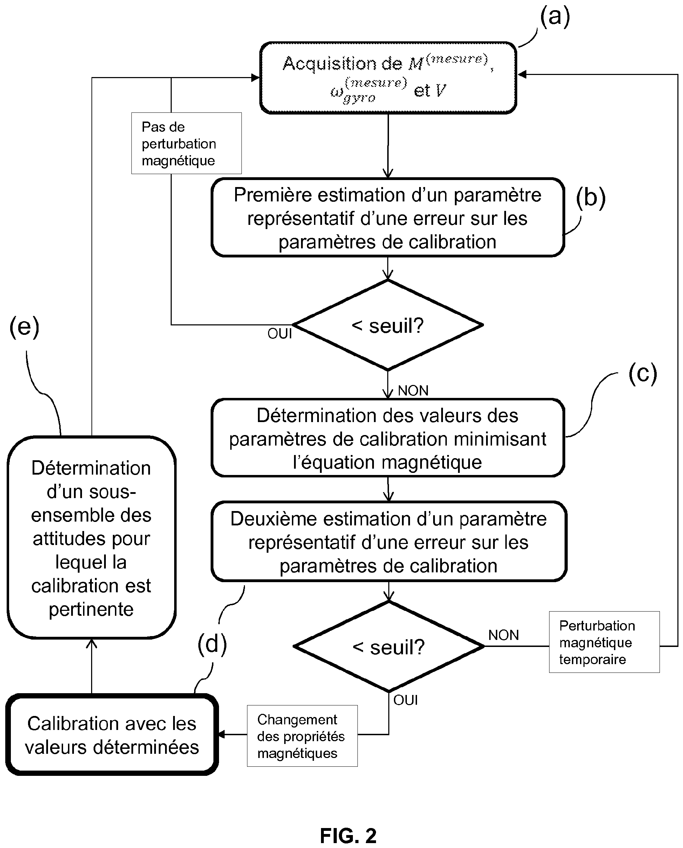

Alors, en référence à la **figure 2,** dans l'étape (c) on va tenter de calibrer les magnétomètres 20 en faisant la double hypothèse d'uniformité et de stationnarité du champ. La mise en œuvre de l'étape (c) peut être précédée d'une étape (b) d'estimation d'un paramètre représentatif d'une erreur sur les paramètres de calibration, l'étape (c) étant mise en œuvre si ce paramètre est supérieur à un seuil prédéterminé, i.e. montre que les magnétomètres 20 ont besoin d'une calibration.

Le procédé comprend ensuite avantageusement une éventuelle étape (d) d'estimation (première ou deuxième estimation selon si le procédé comprend l'étape (b)) dudit paramètre représentatif d'une erreur sur les paramètres de calibration grâce à laquelle on vérifie l'absence de perturbations, i.e. la pertinence des hypothèses.

On comprend donc que dans une double hypothèse de stationnarité et d'uniformité du champ magnétique au niveau des magnétomètres 20, la quantité $\dot{M}^{(estimation)} + \omega_{gyro}^{(estimation)} \times M^{(estimation)}$ $M^{(estimation)}$ est égale à zéro aux erreurs de calibration et au bruit près.

Avantageusement, la première expression (minimisée dans l'étape (c)) est fonction de $\dot{M}^{(estimation)} + \omega_{gyro}^{(estimation)} \times M^{(estimation)}$, et préférentiellement de $\left|\dot{M}^{(estimation)} + \omega_{gyro}^{(estimation)} \times M^{(estimation)}\right|$ ou de $(\dot{M}^{(estimation)} + \omega_{gyro}^{(estimation)} \times M^{(estimation)})^2$. Sous des conditions génériques, la minimisation de ces expressions donnera les paramètres sans ambiguïté pour une trajectoire générique. On comprendra cependant qu'alternativement l'homme du métier pourra utiliser comme première/deuxième expression toute autre fonctionnelle sensible à des écarts par rapport à la relation définie par la première/deuxième équation (norme $L^2$, $L^\infty$, etc.).

Pour mettre en œuvre cette minimisation, les moyens de traitement de données 21 peuvent travailler au cours du temps sur un intervalle d'une longueur donnée. A ce titre, de façon connue un filtre récursif (méthodes RLS, recursive least squares, etc.) ou une optimisation (méthode aux moindres carrés, etc.) peut être utilisé.

Par exemple, dans l'hypothèse où l'on détermine simultanément les paramètres de calibration des magnétomètres 20, i.e. les paramètres *A* et $b_{fer\ dur}$, on peut mettre en œuvre un principe dit de calibration différentielle dans lequel on minimise $\int \left| \dot{M}^{(estimation)} + \omega_{gyro}^{(estimation)} \times M^{(estimation)} \right|^2 dt$ avec $\omega_{gyro}^{(estimation)} = D \cdot (\omega_{gyro}^{(mesure)} + b)$ et $M^{(estimation)} = A^{-1} \cdot (M^{(mesure)} - b_{fer\ dur})$ aux moindre carrés.

Dans un autre exemple, on peut mettre en œuvre un principe dit de calibration intégrale. L'idée est qu'après calibration, le champ mesuré correspond au champ terrestre et doit être constant dans le repère terrestre (constant en norme et en direction), i.e. chaque composante M = $R_{b \to t} M^{(estimation)}$ = *constante (champ terrestre)* avec $R_{b \to t}$ la matrice de passage du repère *body* vers le repère terrestre, déterminée à partie de $\omega_{gyro}^{(estimation)}$. On minimise la somme des variances *(M*$_x$*)+var(M*$_y$*)+var(M*$_z$*)* (avec $(M_x) = \frac{1}{N-1} \sum_j (M_x^{(j)} - \overline{M_x})^2$ et *mutatis mutandis* pour les autres variances) pour trouver les paramètres de calibration à moindres carrés. Cette méthode ne dépend pas de la matrice $R_{b \to t}$ initiale.

*Caractérisation d'erreur*

Comme expliqué, le procédé comprend avantageusement une étape (b) et/ou une étape (d) d'estimation d'un paramètre représentatif d'une erreur sur les paramètres de calibration. Comme expliqué, dans un mode de réalisation préféré comprenant à la fois l'étape (b) et l'étape (d), l'étape (c) est mise en œuvre si ledit paramètre représentatif d'une erreur estimé à l'étape (b) est supérieur à un seuil prédéterminé, et l'étape (d) est préférentiellement mise en œuvre après chaque occurrence de l'étape (c).

L'idée est d'estimer la qualité de l'information fournie par les magnétiques 20 pour écarter des cas peu favorables à la calibration, i.e. des cas de perturbations. Comme l'on verra, on peut distinguer deux causes possibles de dépassement du seuil :

i. une perturbation externe (temporaire) (p.ex. une grande structure en acier/béton à côté de laquelle le véhicule est en train de passer), qui génère des termes de type VM · *V* ou $\frac{\partial M}{\partial t}$ dans l'équation magnétique.

ii. un changement des propriétés magnétiques de la voiture (p.ex. changement de l'aimantation de la carcasse du véhicule, déplacement d'un objet magnétique par un passager).

La première occurrence de l'estimation du paramètre représentatif d'une erreur sur les paramètres de calibration (étape (b)) utilise des paramètres de calibration « originaux », i.e. les paramètres actuels au moment où l'on débute le procédé. La deuxième occurrence de l'estimation du paramètre représentatif d'une erreur sur les paramètres de calibration (étape (d)) utilise les paramètres tels que déterminés à l'étape (c).

Si à l'issue de l'étape (b) ledit paramètre représentatif d'une erreur est inférieur audit seuil prédéterminé, on sait qu'à la fois les paramètres de calibration originaux peuvent être gardés et qu'il n'y a pas de perturbations magnétiques.

Au contraire, en cas de paramètre représentatif d'une erreur supérieur au seuil, on est dans l'un des cas i. et ii. évoqués précédemment. Alors, la mise en œuvre des étapes (c) et (d) permet de distinguer ces deux cas.

Ainsi, si à l'issue de l'étape (d) ledit paramètre représentatif d'une erreur est toujours supérieur audit seuil prédéterminé, l'étape (c) ne s'est pas passée sous des conditions favorables et le résultat de la calibration n'est pas accepté. Plus précisément, et comme l'on voir sur la figure 2, on peut conclure que le problème est dû à une perturbation externe temporaire (cas i), et non à la calibration. On maintient alors la calibration originale pour la zone d'attitude (voir plus loin) pour le futur (par exemple pour quand la perturbation externe a été distancée), i.e. on garde les paramètres de l'ancienne calibration comme calibration. Les mesures magnétiques peuvent éventuellement être déclarées inutilisables tant que le problème persiste.

Au contraire, si ledit paramètre représentatif d'une erreur est à présent inférieur audit seuil prédéterminé, c'est qu'on était dans le cas ii, i.e. la cause du problème était la calibration originale, et l'étape (d) comprend la calibration des magnétomètres 20 et/ou des moyens de mesure inertielle 11 avec les valeurs déterminées à l'étape (c) des paramètres de calibration.

A noter que des valeurs déterminées des paramètres de calibrations lors d'une occurrence de l'étape (c), mais non utilisées pour la calibration effective, peuvent être stockées sur les moyens de stockage de données 12, et utilisées lors d'une future occurrence de l'étape (d). Par exemple, on peut prévoir que tant que le paramètre représentatif d'une erreur est au-dessus du seuil, on stocke les paramètres de calibrations déterminés, et lorsqu'on passe en dessous du seuil, la calibration effective tient également compte des valeurs stockées.

De façon générale, ledit paramètre représentatif d'une erreur sur les paramètres de calibration est fonction de la valeur de ladite expression à minimiser, calculée pour les valeurs déterminées des paramètres de calibration.

Un premier mode de réalisation de l'étape (b)/(d) est dit intrinsèque puisqu'il n'utilise que des grandeurs disponibles dans l'étape (c). De façon préférée, on utilise les résidus d'estimation de l'étape (c), i.e. ledit paramètre représentatif d'une erreur est en particulier la norme (p.ex. $L^2$ ou $L^\infty$) de la valeur de la première/deuxième expression sur un intervalle de temps donné, typiquement $\int \left| \dot{M}^{(estimation)} + \omega_{gyro}^{(estimation)} \times M^{(estimation)} \right|^2 dt$. Dans un tel cas, l'étape (d) peut être mise en œuvre de façon concomitante avec l'étape (c). Dans le cas d'un filtre récursif, on peut utiliser la norme (p.ex. $L^2$ ou $L^\infty$) de l'innovation du filtre sur une période de temps donné. A noter que dans le cas de l'utilisation des résidus pour l'étape (b), on peut utiliser n'importe quel jeu de paramètres de calibration et n'importe quel jeu de données acquises - il n'est pas besoin que les paramètres soient calculés à l'aide des données acquises actuelles (obtenues lors de la dernière mise en œuvre de l'étape (a)). Comme cela, on peut caractériser avant de (voire sans) mettre en œuvre l'étape (c).

Alternativement, on peut quantifier la déviation par rapport à une distribution normale, i.e. regarder si la distribution statistique des valeurs de $\dot{M}^{(estimation)} + \omega_{gyro}^{(estimation)} . M^{(estimation)}$ est gaussien ou non, par exemple en calculant les moments supérieurs.

Selon un deuxième mode, on peut calculer la norme du champ magnétique estimé, et la comparer avec un seuil : si le champ magnétique estimé est anormalement élevé par rapport à la valeur de référence du champ terrestre, c'est qu'il y a une perturbation magnétique.

Selon un troisième mode de réalisation, on peut tout simplement estimer un gradient spatial des composantes du champ magnétique, i.e. ∇M.

En effet, cette estimation doit être proche de zéro pour que le caractère uniforme soit retenu. Il est souhaitable dans ce mode de disposer de trois triaxes magnétométriques, et en tout état de cause d'au moins huit magnétomètres 20, pour déterminer les coefficients du champ ainsi que son gradient.

Alternativement ou en complément, on peut recourir à de l'apprentissage pour améliorer l'estimation de ce paramètre d'erreur et/ou développer une approche d'identification de conditions favorables (i.e. stationnaires et uniformes) de manière plus robuste et avec une disponibilité augmentée.

En particulier, on peut mettre en œuvre des mécanismes d'apprentissage tels que des réseaux de neurones, machines à vecteurs de support, méthodes des plus proches voisins, forêts d'arbres décisionnels, etc. Ainsi, à chaque occurrence des étapes (b) à (d), on peut venir enrichir une base d'apprentissage dans laquelle chaque ensemble de données de mesures est « taggué » avec la valeur correspondante du paramètre représentatif d'une erreur, de sorte à progressivement (au fur et à mesure des occurrences successives des étapes (b) à (d)) et automatiquement apprendre à distinguer les calibrations acceptables de celles non acceptables. Ainsi, le calibrage s'améliore de lui-même en permanence.

*Zone de calibration*

En théorie, il n'y a qu'un seul jeu de paramètres de calibration qui corrige les défauts dans la mesure du champ magnétique pour l'ensemble des attitudes de l'objet 1.

En pratique, le long d'un trajet typique d'un véhicule pendant une période limitée en temps, seul un sous-ensemble des attitudes est exploré. L'optimisation pour ce sous-ensemble d'attitude produit un jeu de paramètres de calibration qui est issue d'une minimisation locale (sur le sous-ensemble d'attitude considéré). Il se peut donc que ce jeu de paramètre de calibration ne soit pas optimal en dehors du sous-espace d'attitude considéré, qui est appelé « zone de calibration ».

De façon préférée, le procédé comprend en outre, si ledit paramètre représentatif d'une erreur est inférieur à un seuil prédéterminé, une étape (e) de détermination d'un sous-ensemble des attitudes de l'objet pour lequel la calibration est pertinente. A noter qu'il peut y avoir plusieurs sous-ensembles retenus pour plusieurs calibrations.

Cela peut permettre d'améliorer sensiblement la calibration : pendant le déplacement de l'objet 1, on peut distinguer deux cas selon l'attitude actuelle :

i. Si l'attitude de l'objet 1 n'est couverte par aucun sous-ensemble pertinent, on peut mettre en œuvre le présent procédé ou sinon choisir une calibration par défaut de manière arbitraire.

ii. Si l'attitude de l'objet 1 actuelle est couverte par un sous-ensemble pertinent, la calibration adéquate pour cette zone est utilisée.

Ledit sous-ensemble peut être caractérisé par exemple par des intervalles d'angles d'Euler, ou bien par une autre paramétrisation de la variété d'attitudes (quaternions, matrices orthogonales).

En ce qui concerne sa détermination, on peut la déterminer par l'enveloppe convexe des données d'attitude issues de l'ensemble des points de mesure, ou bien par l'ensemble des mesures lui-même.

*Estimation du mouvement*

Comme expliqué, le procédé comprend avantageusement une étape (f) d'estimation par les moyens de traitement de données 21 du mouvement dudit objet 1 en fonction de la vitesse angulaire de l'objet 1 et/ou des composantes du champ magnétique, et/ou de d'une éventuelle vitesse linéaire mesurée de l'objet 1 (par les moyens 10), et des valeurs des paramètres de calibration, i.e. après recalibration. Cette étape (f), qui n'est pas représentée sur la figure 2 qui se concentre sur la calibration, peut être mise en œuvre en continu parallèlement.

Par estimation du mouvement, on entend en particulier au moins l'estimation d'une orientation de l'objet 1 (dans le plan horizontal, i.e. un cap) et avantageusement l'estimation d'une norme de vitesse. On peut pour cela soit simplement mettre en œuvre une navigation avec le cap magnétique (i.e. à la « boussole ») obtenu avec les mesures magnétométriques, ou une navigation gyrométrique voire une fusion magnéto-gyrométrique au cas de double calibration. Dans le dernier cas l'orientation s'obtient typiquement par intégration de la vitesse angulaire.

Le cas échéant, la vitesse linéaire mesurée (par les éventuels moyens 10) n'est utilisée dans l'étape (f) que pour déterminer une vitesse globale de l'objet 1.

L'étape (f) peut en outre comprendre le calcul en fonction dudit paramètre représentatif d'une erreur sur les paramètres de calibration, d'une erreur magnétométrique ou gyro-magnétométrique en orientation (cap). Par exemple, l'erreur en cap accumulée pendant une période après une calibration peut être estimée par l'incertitude dans l'estimation du biais multipliée avec la durée de cette période.

A noter que dans un cas de véhicule autonome, l'étape (f) peut comprendre la génération d'une commande dudit véhicule 1 en fonction du mouvement estimé, de sorte à amener le véhicule 1 par exemple jusqu'à une destination souhaitée, ou à stopper le véhicule 1 en le gardant dans une trajectoire dénuée d'obstacles.

*Equipements et objet*

Selon un deuxième aspect, l'invention concerne en particulier un ensemble des équipements 11, 20, 21 et éventuellement 10 pour la mise en œuvre de l'un ou l'autre des modes de réalisation du procédé.

Cet ensemble peut être installé en kit dans un objet 1 « classique » de sorte à le transformer. Alternativement, en particulier dans le cas où l'objet 1 est un véhicule, ce peut être un véhicule autonome déjà muni de moyens de traitement de données 21 pour la navigation du véhicule, ainsi que de capteurs tels que le gyromètre 11 et/ou des odomètres servant de moyens d'acquisition supplémentaire 10.

*Produit programme d'ordinateur*

Selon un troisième et un quatrième aspect, l'invention concerne un produit programme d'ordinateur comprenant des instructions de code pour l'exécution (sur les moyens de traitement 21) d'un procédé de calibration des magnétomètres selon le premier aspect de l'invention, ainsi que des moyens de stockage lisibles par un équipement informatique (par exemple des moyens de stockage de données 22) sur lequel on trouve ce produit programme d'ordinateur.

**Revendications**

1. Procédé de calibration de magnétomètres (20) équipant un objet (1) évoluant dans un champ magnétique ambiant, le procédé étant **caractérisé en ce qu'**il comprend des étapes de :

   (a) Acquisition

   - par les magnétomètres (20), d'au moins trois composantes mesurées du champ magnétique au niveau des magnétomètres (20), et
   - par des moyens de mesure inertielle (11) solidaires dudit objet (1), d'une vitesse angulaire de l'objet (1) ;

(c) Détermination par des moyens de traitement de données (21) de valeurs d'au moins un paramètre de calibration des magnétomètres (20) minimisant une expression définie par des composantes estimées du champ magnétique et au moins une équation magnétique sur la vitesse angulaire de l'objet (1),

- les composantes estimées du champ magnétique étant fonction des composantes mesurées du champ magnétique et de paramètres de calibration des magnétomètres (20), et
- l'au moins une équation magnétique supposant un caractère uniforme et stationnaire du champ magnétique au niveau des moyens de mesure magnétique (20) ;

dans lequel l'équation magnétique est de la forme $\dot{M} = -\omega \times M$, où M est le vecteur des composantes du champ magnétique, et $\omega$ est la vitesse angulaire,

ladite expression étant fonction de $\dot{M}^{(estimation)} + \omega_{gyro}^{(estimation)} \times$ $M^{(estimation)}$, , $M^{(estimation)}$ M , où M sont les composantes estimées et $\omega^{(estimation)}$ gyro est une vitesse angulaire estimée de l'objet (1).

2. Procédé selon la revendication 1, dans laquelle les composantes estimées $M^{(estimation)}$ du champ magnétique sont liées aux composantes mesurées $M^{(mesure)}$ par un modèle $M^{(mesure)} = A \cdot M^{(estimation)} + b_{magneto}$, où $A$ et $b_{magneto}$ sont les paramètres de calibration des magnétomètres (20).

3. Procédé selon l'une des revendications 1 et 2, comprenant en outre une étape (b) d'estimation d'un paramètre représentatif d'une erreur sur les paramètres de calibration, l'étape (c) étant mise en œuvre si ledit paramètre représentatif d'une erreur est supérieur à un seuil prédéterminé.

4. Procédé selon la revendication 3, comprenant en outre une étape (d) de nouvelle estimation dudit paramètre représentatif d'une erreur sur les paramètres de calibration de sorte à distinguer une perturbation magnétique externe d'un changement de propriétés magnétiques de l'objet (1).

5. Procédé selon la revendication 4, comprenant en outre, si à l'issue de l'étape (d) ledit paramètre représentatif d'une erreur est inférieur à un seuil prédéterminé, une étape (e) de détermination d'un sous-ensemble des attitudes de l'objet (1) pour lequel la calibration est pertinente.

6. Procédé selon l'une des revendications 3 à 5, dans laquelle ledit paramètre représentatif d'une erreur sur les paramètres de calibration est soit la moyenne de $\left|\dot{M}^{(estimation)} + \omega_{gyro}^{(estimation)} \times M^{(estimation)}\right|^2$ sur un intervalle de temps donné, soit un gradient spatial desdites composantes du champ magnétique.

7. Procédé selon l'une des revendications 1 à 6, dans lequel l'étape (c) comprend la mise en œuvre d'un filtre récursif ou d'une optimisation.

8. Procédé selon l'une des revendications 1 à 7, dans lequel les moyens de mesure inertielle (11) sont un gyromètre, la vitesse angulaire de l'objet (1) acquise à l'étape (a) étant une vitesse angulaire mesurée, et celle utilisée par la ou les équations magnétiques est une vitesse angulaire estimée en fonction de la vitesse angulaire mesurée et de paramètres de calibration du gyromètre (11), l'étape (c) comprenant également la détermination de valeurs d'au moins un paramètre de calibration du gyromètre (11).

9. Procédé selon la revendication 8, dans laquelle la vitesse angulaire estimée $\omega_{gyro}^{(estimation)}$ de l'objet (1) est liée à la vitesse angulaire mesurée $\omega_{gyro}^{(mesure)}$ par un modèle $\omega_{gyro}^{(estimation)} = D \cdot (\omega_{gyro}^{(mesure)} + b_{gyro})$, où D et $b_{gyro}$ sont les paramètres de calibration du gyromètre (11).

10. Procédé selon l'une des revendication 1 à 9, comprenant une étape (f) d'estimation par les moyens de traitement de données (21) du mouvement dudit objet (1) en fonction de la vitesse angulaire de l'objet (1), des composantes mesurées du champ magnétique, et des valeurs des paramètres de calibration.

11. Objet (1) évoluant dans un champ magnétique ambiant, comprenant des moyens de mesure inertielle (11) configurés pour acquérir une vitesse angulaire de l'objet (1), des magnétomètres (20) configurés pour acquérir au moins trois composantes du champ magnétique, l'objet (1) étant **caractérisé en ce qu'**il comprend en outre des moyens de traitement de données (21) configurés pour :

- déterminer des valeurs d'au moins un paramètre de calibration des magnétomètres (20) minimisant une expression définie par des composantes estimées du champ magnétique et au moins une équation magnétique sur la vitesse angulaire de l'objet (1),
  - les composantes estimées du champ magnétique étant fonction des composantes mesurées du champ magnétique et de paramètres de calibration des magnétomètres (20), et
  - l'au moins une équation magnétique supposant un caractère uniforme et stationnaire du champ magnétique au niveau des moyens de mesure magnétique (20) ;

dans lequel l'équation magnétique est de la forme $\dot{M} = -\omega \times M$, où M est le vecteur des composantes du champ magnétique, et $\omega$ est la vitesse angulaire, ladite expression étant fonction de $\dot{M}^{(estimation)} + \omega_{gyro}^{(estimation)}$ $M^{(estimation)}$ sont les composantes estimées et $\omega^{(estimation)}_{gyro}$ est une vitesse angulaire estimée de l'objet (1).

**12.** Produit programme d'ordinateur comprenant des instructions de code pour l'exécution d'un procédé de calibration de magnétomètres (20) selon l'une des revendications 1 à 10, lorsque ledit programme est exécuté sur un ordinateur.

**13.** Moyen de stockage lisible par un équipement informatique sur lequel un produit programme d'ordinateur comprend des instructions de code pour l'exécution d'un procédé de calibration de magnétomètres (20) selon l'une des revendications 1 à 10.

## Patentansprüche

**1.** Verfahren zur Kalibrierung von Magnetometern (20), die ein Objekt (1) ausstatten, das sich in einem Umgebungsmagnetfeld bewegt, wobei das Verfahren **dadurch gekennzeichnet ist, dass** es die Schritte umfasst, der:

(a) Erfassung

- durch die Magnetometer (20), von mindestens drei gemessenen Komponenten des Magnetfeldes im Bereich der Magnetometer (20), und
- durch Trägheitsmessmittel (11), die an das Objekt (1) angebaut sind, einer Winkelgeschwindigkeit des Objekts (1);

(c) Ermittlung, durch Datenverarbeitungsmittel (21), von Werten mindestens eines Kalibrierungsparameters der Magnetometer (20), der einen Ausdruck minimiert, der durch geschätzte Komponenten des Magnetfeldes definiert ist und mindestens einer magnetischen Gleichung zur Winkelgeschwindigkeit des Objekts (1),

- die geschätzten Komponenten des Magnetfeldes sind abhängig von den gemessenen Komponenten des Magnetfeldes und den Kalibrierungsparametern der Magnetometer (20), und
- die mindestens eine magnetische Gleichung nimmt einen gleichmäßigen und stationären Charakter des Magnetfeldes im Bereich der magnetischen Messmitteln (20) an;

wobei die magnetische Gleichung von der Form $\dot{M} = -\omega \times M$ ist, wobei M der Vektor der Komponenten des Magnetfeldes ist, und $\omega$ die Winkelgeschwindigkeit ist,

wobei der Ausdruck abhängig ist von $\dot{M}^{(estimation)} + \omega_{gyro}^{(estimation)} \times$ $M^{(estimation)}$, wobei $M^{(estimation)}$ die geschätzten Komponenten sind und $\omega_{gyro}^{(estimation)}$ eine geschätzte Winkelgeschwindigkeit des Objekts (1) ist.

**2.** Verfahren nach Anspruch 1, wobei die geschätzten Komponenten $M^{(estimation)}$ des Magnetfeldes mit den gemessenen Komponenten $M^{(mesure)}$ durch ein Muster $M^{(mesure)} = A \cdot M^{(estimation)} + b_{magneto}$ verbunden sind, wobei $A$ und

$b_{magneto}$ die Kalibrierungsparameter der Magnetometer (20) sind.

**3.** Verfahren nach einem der Ansprüche 1 und 2, ferner einen Schritt (b) der Schätzung eines Parameters umfassend, der für einen Fehler in den Kalibrierungsparametern repräsentativ ist, wobei Schritt (c) implementiert wird, wenn der für einen Fehler repräsentative Parameter einen vorbestimmten Schwellenwert überschreitet.

**4.** Verfahren nach Anspruch 3, ferner einen Schritt (d) der erneuten Schätzung des Parameters umfassend, der für einen Fehler in den Kalibrierungsparametern repräsentativ ist, um eine externe magnetische Störung von einer Änderung der magnetischen Eigenschaften des Objekts (1) zu unterscheiden.

**5.** Verfahren nach Anspruch 4, ferner umfassend, wenn nach dem Schritt (d) der für einen Fehler repräsentative Parameter kleiner als ein vorbestimmter Schwellenwert ist, einen Schritt (e) der Ermittlung einer Teilmenge der Einstellungen des Objekts (1), für das die Kalibrierung relevant ist.

**6.** Verfahren nach einem der Ansprüche 3 bis 5, wobei der Parameter, der für einen Fehler in den Kalibrierungsparametern repräsentativ ist, entweder der Mittelwert von $\left|\dot{M}^{(estimation)} + \omega_{gyro}^{(estimation)} \times M^{(estimation)}\right|^2$ über einen gegebenen Zeitintervall ist oder ein räumlicher Gradient der Komponenten des Magnetfeldes.

**7.** Verfahren nach einem der Ansprüche 1 bis 6, wobei der Schritt (c) die Implementierung eines rekursiven Filters oder einer Optimierung umfasst.

**8.** Verfahren nach einem der Ansprüche 1 bis 7, wobei die Trägheitsmessmittel (11) ein Gyrometer sind, wobei die in Schritt (a) erfasste Winkelgeschwindigkeit des Objekts (1) eine gemessene Winkelgeschwindigkeit ist und diejenige, die von der oder den magnetischen Gleichungen verwendet wird, eine geschätzte Winkelgeschwindigkeit in Abhängigkeit von der gemessenen Winkelgeschwindigkeit und den Kalibrierungsparametern des Gyrometers (11) ist, wobei der Schritt (c) auch die Ermittlung von Werten von mindestens einem Kalibrierungsparameter des Gyrometers (11) umfasst.

**9.** Verfahren nach Anspruch 8, wobei die geschätzte Winkelgeschwindigkeit $\omega_{gyro}^{(estimation)}$ des Objekts (1) mit der gemessenen Winkelgeschwindigkeit $(\omega_{gyro}^{(mesure)}$ durch ein Muster $\omega_{gyro}^{(estimation)} = D \cdot (\omega_{gyro}^{(mesure)} + b_{gyro})$ verbunden ist, wobei $D$ und $b_{gyro}$ die Kalibrierungsparameter des Gyrometers (11) sind.

**10.** Verfahren nach einem der Ansprüche 1 bis 9, einen Schritt (f) der Schätzung der Bewegung des Objekts (1) durch die Datenverarbeitungsmittel (21) umfassend, in Abhängigkeit von der Winkelgeschwindigkeit des Objekts (1), den gemessenen Komponenten des Magnetfeldes und den Werten der Kalibrierungsparameter.

**11.** Objekt (1), das sich in einem Umgebungsmagnetfeld bewegt, Trägheitsmessmittel (11) umfassend, die konfiguriert sind, um eine Winkelgeschwindigkeit des Objekts (1) zu erfassen, Magnetometer (20), die konfiguriert sind, um mindestens drei Komponenten des Magnetfeldes zu erfassen, wobei das Objekt (1) **dadurch gekennzeichnet ist, dass** es ferner Datenverarbeitungsmittel (21) umfasst, die konfiguriert sind, zum:

- Ermitteln von Werten mindestens eines Kalibrierungsparameters der Magnetometer (20), der einen Ausdruck minimiert, der durch geschätzte Komponenten des Magnetfeldes definiert ist, und mindestens einer magnetischen Gleichung zur Winkelgeschwindigkeit des Objekts (1),

  - die geschätzten Komponenten des Magnetfeldes sind abhängig von den gemessenen Komponenten des Magnetfeldes und den Kalibrierungsparametern der Magnetometer (20), und
  - die mindestens eine magnetische Gleichung nimmt einen gleichmäßigen und stationären Charakter des Magnetfeldes im Bereich der magnetischen Messmittel (20) an;

wobei die magnetische Gleichung von der Form $\dot{M} = -\omega \times M$ ist, wobei M der Vektor der Komponenten des Magnetfeldes ist, und $\omega$ ist die Winkelgeschwindigkeit, wobei der Ausdruck abhängig ist von $\dot{M}^{(estimation)} + \omega_{gyro}^{(estimation)} \times \mathrm{M}^{(estimation)}$, wobei $M^{(estimation)}$ die geschätzten Komponenten sind und $\omega_{gyro}^{(estimation)}$

ist eine geschätzte Winkelgeschwindigkeit des Objekts (1).

**12.** Computerprogrammprodukt, Codeanweisungen zur Ausführung eines Verfahrens zur Kalibrierung von Magnetometern (20) umfassend, nach einem der Ansprüche 1 bis 10, wenn das Programm auf einem Computer ausgeführt wird.

**13.** Speichermittel, lesbar von einer Computerausrüstung, auf der ein Computerprogrammprodukt Codeanweisungen umfasst zur Ausführung eines Verfahrens zur Kalibrierung von Magnetometern (20), nach einem der Ansprüche 1 bis 10.

**Claims**

**1.** Method for calibrating magnetometers (20) of an object (1) moving in an ambient magnetic field, the method being **characterised in that** it comprises the steps of:

(a) Acquisition

- by the magnetometers (20), of at least three measured components of the magnetic field around the magnetometers (20), and
- by inertial measurement means (11) which are secured to said object (1), of an angular velocity of the object (1);

(c) Determination, by data processing means (21), of values of at least one calibration parameter of the magnetometers (20) minimising an expression defined by estimated components of the magnetic field and at least one magnetic equation relating to the angular velocity of the object (1),

- the estimated components of the magnetic field being a function of the measured components of the magnetic field as well as of calibration parameters of the magnetometers (20), and
- the at least one magnetic equation assuming that the magnetic field is uniform and stationary around the magnetic measurement means (20);

wherein the magnetic equation is of the form $\dot{M} = -\omega \times M$, where M is the vector of the components of the magnetic field, and $\omega$ the angular velocity,

said expression being a function of $\dot{M}^{(estimation)} + \omega_{gyro}^{(estimation)} \times M^{(estimation)}$, where $M^{(estimation)}$ are the estimated components and $\omega_{gyro}^{(estimation)}$ is the estimated angular velocity of the object (1).

**2.** Method according to claim 1, wherein the estimated components $M^{(estimation)}$ of the magnetic field are linked to the measured components $M^{(measurement)}$ by a model $M^{(measurement)} = A \cdot M^{(estimation)} + b_{magneto}$, where $A$ and $b_{magneto}$ are the calibration parameters of the magnetometers (20).

**3.** Method according to one of claims 1 and 2, further comprising a step (b) of estimating a parameter representative of an error on the calibration parameters, the step (c) being implemented if said parameter representative of an error is greater than a predetermined threshold.

**4.** Method according to claim 3, further comprising a step (d) of a new estimation of said parameter representative of an error on the calibration parameters in such a way as to distinguish an external magnetic disturbance from a change in the magnetic properties of the object (1).

**5.** Method according to claim 4, further comprising, if at the end of step (d) said parameter representative of an error is less than a predetermined threshold, a step (e) of determining an attitude subset of the object (1) for which the calibration is pertinent.

**6.** Method according to one of claims 3 to 5, wherein said parameter representative of an error on the calibration parameters is either mean of $\left|\dot{M}^{(estimation)} + \omega_{gyro}^{(estimation)} \times M^{(estimation)}\right|^2$ over a given time interval, or a spatial gradient of said components of the magnetic field.

**7.** Method according to one of claims 1 to 6, wherein step (c) comprises the implementation of a recursive filter or of an optimisation.

**8.** Method according to one of claims 1 to 7, wherein the inertial measurement means (11) are a gyrometer, the angular velocity of the object (1) acquired in step (a) being a measured angular velocity, and that used by the magnetic equation or equations is an estimated angular velocity according to the measured angular velocity and calibration parameters of the gyrometer (11), step (c) also comprising the determination of values of at least one calibration parameter of the gyrometer (11).

**9.** Method according to claim 8, wherein the estimated angular velocity $\omega_{gyro}^{(estimation)}$ of the object (1) is linked to the measured angular velocity $\omega_{gyro}^{(measurement)}$ by a model $\omega_{gyro}^{(estimation)} = D \cdot (\omega_{gyro}^{(measurement)} + b_{gyro})$, where $D$ and $b_{gyro}$ are the calibration parameters of the gyrometer (11).

**10.** Method according to one of claims 1 to 9, comprising a step (f) of estimating, by the data processing means (21), the movement of said object (1) according to the angular velocity of the object (1), measured components of the magnetic field, and values of the calibration parameters.

**11.** Object (1) moving in an ambient magnetic field, comprising inertial measurement means (11) configured to acquire an angular velocity of the object (1), magnetometers (20) configured to acquire at least three components of the magnetic field, the object (1) being **characterised in that** it further comprises data processing means (21) configured to:

- determine the values of at least one calibration parameter of the magnetometers (20) minimising an expression defined by estimated components of the magnetic field and at least one magnetic equation relating to the angular velocity of the object (1),

  - the estimated components of the magnetic field being a function of the measured components of the magnetic field as well as of calibration parameters of the magnetometers (20), and
  - the at least one magnetic equation assuming that the magnetic field is uniform and stationary around the magnetic measurement means (20);

wherein the magnetic equation is of the form $\dot{M} = -\omega \times M$, where M is the vector of the components of the magnetic field, and $\omega$ the angular velocity, said expression being a function of $\dot{M}^{(estimation)} + \omega_{gyro}^{(estimation)} \times M^{(estimation)}$, where $M^{(estimation)}$ are the estimated components and $\omega_{gyro}^{(estimation)}$ is the estimated angular velocity of the object (1).

**12.** Computer program product comprising code instructions for the execution of a method for calibrating magnetometers (20) according to one of claims 1 to 10, when said program is executed on a computer.

**13.** Storage means readable by a piece of computer equipment whereon a computer program product comprises code instructions for the execution of a method for calibrating magnetometers (20) according to one of claims 1 to 10.

20
1
11
23
10
21
22

FIG. 1

(a)
Acquisition de $M^{(mesure)}$, $\omega_{gyro}^{(mesure)}$ et $V$
Pas de perturbation magnétique
Première estimation d'un paramètre représentatif d'une erreur sur les paramètres de calibration
(b)
< seuil?
OUI
NON
(e)
(c)
Détermination des valeurs des paramètres de calibration minimisant l'équation magnétique
Détermination d'un sous-ensemble des attitudes pour lequel la calibration est pertinente
Deuxième estimation d'un paramètre représentatif d'une erreur sur les paramètres de calibration
(d)
< seuil?
NON
Perturbation magnétique temporaire
OUI
Calibration avec les valeurs déterminées
Changement des propriétés magnétiques

**FIG. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20120116716 A
- US 20040123474 A
- FR 1757082
- US 20110178707 A
- US 20020100178 A


### Littérature non-brevet citée dans la description


- **E. DORVEAUX, D. VISSIÈRE, A. P. MARTIN, N. PETIT.** Iterative calibration method for inertial and magnetic sensors. *Proc. of the 48th IEEE Conf. on Decision and Control,* 2009
- **C.-I. CHESNEAU ; M. HILLION ; C. PRIEUR.** Motion estimation of a Rigid Body with an EKF using Magneto-Inertial Measurements. *7th Conf. on Indoor Positioning and Indoor Navigation (IPIN'16), Madrid, Spain,* 2016